(19) Europäisches Patentamt
European Patent Office
Office européen des brevets

(11) **EP 4 102 596 A1**

(12) # EUROPEAN PATENT APPLICATION
published in accordance with Art. 153(4) EPC

(43) Date of publication:
**14.12.2022 Bulletin 2022/50**

(21) Application number: **21751372.0**

(22) Date of filing: **28.01.2021**

(51) International Patent Classification (IPC):
***H01M 4/1391*** *(2010.01)* ***H01M 4/48*** *(2010.01)*
***H01G 11/24*** *(2013.01)* ***H01G 11/30*** *(2013.01)*
***H01G 11/86*** *(2013.01)*

(52) Cooperative Patent Classification (CPC):
**H01G 11/24; H01G 11/30; H01G 11/86;**
**H01M 4/1391; H01M 4/48;** Y02E 60/10

(86) International application number:
**PCT/JP2021/002970**

(87) International publication number:
**WO 2021/157460 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.02.2020 JP 2020019698**

(71) Applicant: **DIC Corporation**
**Tokyo 174-8520 (JP)**

(72) Inventors:
- **KATANO, Satoshi**
  **Sakura-shi, Chiba 285-8668 (JP)**
- **KAWASE, Kenichi**
  **Sakura-shi, Chiba 285-8668 (JP)**
- **ZHU, Peixin**
  **Sakura-shi, Chiba 285-8668 (JP)**
- **OOTSUKA, Shunichi**
  **Sakura-shi, Chiba 285-8668 (JP)**

(74) Representative: **TBK**
**Bavariaring 4-6**
**80336 München (DE)**

(54) **LOW OXYGEN-TYPE SILICON NANOPARTICLE-CONTAINING SLURRY, NEGATIVE ELECTRODE ACTIVE MATERIAL, NEGATIVE ELECTRODE AND LITHIUM ION SECONDARY BATTERY**

(57) An object of the present invention is to provide a low oxygen-type silicon nanoparticle-containing slurry that can inhibit a viscosity increase along with the nanosizing of silicon particles and can be used for the production of a lithium-ion secondary battery having excellent charge-discharge characteristics (charge-discharge capacity, initial coulombic efficiency, and charge-discharge cycle characteristics). The above object is achieved by providing a low oxygen-type silicon nanoparticle-containing slurry containing low oxygen-type silicon nanoparticles, a nonaqueous solvent, and an additive, the low oxygen-type silicon nanoparticles having a ratio of a peak area (ii) in a range of -100 to -110 ppm to a peak area (i) in a range of -75 to -85 ppm [a (ii)/(i) ratio] of 1.0 or less in $^{29}$Si-NMR.

[Fig. 1]

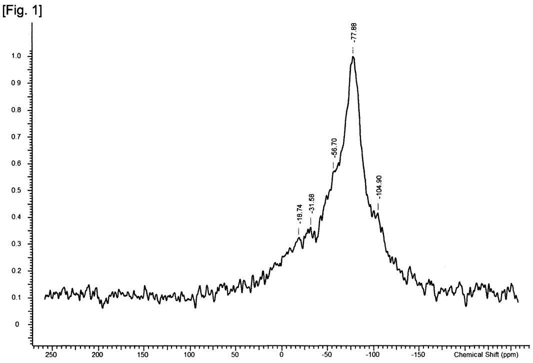


EP 4 102 596 A1

## Description

### Technical Field

This invention relates to a low oxygen-type silicon nanoparticle-containing slurry, a negative electrode active material, a negative electrode, and a lithium-ion secondary battery.

### Background Art

In recent years, there is an increasing demand for compact, high-capacity secondary batteries with the spread of portable electronic devices such as smartphones. Among these, lithium-ion secondary batteries (may be denoted as LIBs) are being rapidly applied to electric vehicles (EVs), and their industrial applications continue to expand. Although graphite active materials (natural and artificial) as a type of carbon are being widely used as negative electrode materials for lithium-ion secondary batteries, the theoretical capacity density of graphite is low (372 mAh/g), and due to the advance of lithium-ion secondary battery construction technology, battery capacity improvement is approaching its limit.

Given these circumstances, to achieve higher capacity and higher energy density in lithium-ion secondary batteries, active materials containing silicon-based materials containing silicon and its oxides to be alloyed with lithium ions are being studied. Among them, silicon oxycarbide (hereinafter may be denoted as SiOC) is a material containing a ceramic framework containing Si, O, and C and free carbon and has been attracting attention for having superior charge-discharge cycle characteristics compared to other types of high-capacity active materials. However, SiOC has not been put into practical use because of having weaknesses in which both charge-discharge capacity and initial coulombic efficiency are low due to its structural limitations. To solve this problem, a method of combining SiOC with silicon, silicon alloys, or silicon oxide is being studied. PTL 1, for example, proposes a negative electrode material for a lithium-ion secondary battery containing composite particles containing 5 to 30% by volume of active material particles containing silicon particles or silicon particles coated with carbon with respect to SiOC. Also disclosed are silicon-based inorganic oxide composite particles in which fine particles of silicon, silicon alloys, or silicon oxide are combined with SiOC as an inorganic binder, and spherical or scaly graphite is introduced (PTL 2).

However, it is known that silicon and the silicon alloy introduced in PTL 1 and PTL 2 are pulverized due to the repetition of volume expansion and contraction during charging and discharging, causing the separation and disintegration of an electrode material from a current collector, the deterioration of electron conductivity, and the like, and thus bringing about a reduction in charge-discharge cycle characteristics. To solve these problems, it is common to try to improve charge-discharge cycle characteristics by pulverizing silicon particles to be nanosized, thereby stress-relieving strain caused by volume expansion and contraction due to repeated charging and discharging. However, there is a problem in that reductions in battery characteristics such as a reduction in capacity and a reduction in coulombic efficiency by an increase in surface area due to nanosizing and accompanying surface oxidation of the silicon particles occur at the same time. In addition, there is a problem in that when the silicon particles are pulverized to be nanosized, a viscosity increase occurs in a slurry containing them.

### Citation List

### Patent Literature

PTL 1: Japanese Unexamined Patent Application Publication No. 2016-139579
PTL 2: Japanese Unexamined Patent Application Publication No. 2005-310759

### Summary of Invention

### Technical Problem

In view of the above circumstances, an object of the present invention is to provide a low oxygen-type silicon nanoparticle-containing slurry that can inhibit a viscosity increase along with the nanosizing of silicon particles and can be used for the production of a lithium-ion secondary battery having excellent charge-discharge characteristics (charge-discharge capacity, initial coulombic efficiency, and charge-discharge cycle characteristics).

Solution to Problem

To achieve the above object, the inventors of the present invention have studied a silicon nanoparticle-containing slurry that can maximally improve charge-discharge characteristics in a lithium-ion secondary battery containing a silicon-based inorganic compound (an SiOC/C matrix, for example) as a negative electrode active material and have found out that silicon nanoparticles are controlled to be a low oxidation state to exhibit excellent charge-discharge characteristics to reach the present invention.

Specifically, the present invention is as follows.

Item 1. A low oxygen-type silicon nanoparticle-containing slurry containing low oxygen-type silicon nanoparticles, a nonaqueous solvent, and an additive,
the low oxygen-type silicon nanoparticles having a ratio of a peak area (ii) in a range of -100 to -110 ppm to a peak area (i) in a range of -75 to -85 ppm [a (ii)/(i) ratio] of 1.0 or less in $^{29}$Si-NMR.
Item 2. The low oxygen-type silicon nanoparticle-containing slurry according to Item 1, in which the low oxygen-type silicon nanoparticles have a volume average particle size (d50) of 10 to 200 nm.
Item 3. The low oxygen-type silicon-containing slurry according to Item 1 or 2, containing a cationic surfactant and/or an anionic surfactant as the additive.
Item 4. The low oxygen-type silicon-containing slurry according to Item 3, in which the additive has an amine value of the cationic surfactant of 1 to 100 mgKOH/g.
Item 5. The low oxygen-type silicon-containing slurry according to Item 3, in which the additive has an acid value of the anionic surfactant of 1 to 200 mgKOH/g.
Item 6. The low oxygen-type silicon nanoparticle-containing slurry according to any one of Items 1 to 5, in which the low oxygen-type silicon nanoparticles have a sheet shape.
Item 7. The low oxygen-type silicon nanoparticle-containing slurry according to any one of Items 1 to 6, in which the low oxygen-type silicon nanoparticle-containing slurry has a viscosity of 10 mPa·s or less.
Item 8. The low oxygen-type silicon nanoparticle-containing slurry according to any one of Items 1 to 7, in which the low oxygen-type silicon nanoparticle-containing slurry has a nonvolatile component at 110°C of 5 to 40% by weight.
Item 9. The low oxygen-type silicon nanoparticle-containing slurry according to any one of Items 1 to 8, in which the nonaqueous solvent is a ketone-based solvent.
Item 10. The low oxygen-type silicon nanoparticle-containing slurry according to any one of Items 1 to 9, in which the additive is contained in an amount of 5 to 60 parts by mass with respect to 100 parts by mass of the low oxygen-type silicon nanoparticles.
Item 11. A negative electrode active material for a lithium-ion secondary battery containing the low oxygen-type silicon nanoparticle-containing slurry according to any one of Items 1 to 10 as part of raw materials.
Item 12. A secondary battery containing the lithium-ion secondary battery active material according to Item 11 in a negative electrode.
Item 13. A method for producing the low oxygen-type silicon nanoparticle-containing slurry according to any one of Items 1 to 10, the method including obtaining the low oxygen-type silicon nanoparticles by performing dispersion processing using a wet bead mill.
Item 14. The method for producing the low oxygen-type silicon nanoparticle-containing slurry according to Item 13, in which the dispersion processing is performed in an inert gas atmosphere.

Advantageous Effects of Invention

The low oxygen-type silicon nanoparticles of the low oxygen-type silicon nanoparticle-containing slurry according to the present invention are uniformly dispersed in a silicon-based inorganic compound (an SiOC/C matrix, for example) as a negative electrode active material to control an expansion rate, thus giving excellent charge-discharge cycle characteristics, and the oxidation of a silicon surface is inhibited, thus giving high charge-discharge capacity and high initial coulombic efficiency. In addition, the low oxygen-type silicon nanoparticle-containing slurry according to the present invention can achieve both the nanosizing of silicon and low viscosity.

Brief Description of Drawings

FIG. 1 is a chart diagram of a $^{29}$Si-NMR spectrum of low oxygen-type silicon nanoparticles of Example 1.
FIG. 2 is a transmission electron microscopic (TEM) image of the low oxygen-type silicon nanoparticles of Example 1.
FIG. 3 is a chart diagram of a $^{29}$Si-NMR spectrum of low oxygen-type silicon nanoparticles of Example 2.

FIG. 4 is a chart diagram of a $^{29}$Si-NMR spectrum of low oxygen-type silicon nanoparticles of Example 3.
FIG. 5 is a transmission electron microscopic (TEM) image of the low oxygen-type silicon nanoparticles of Example 3.
FIG. 6 is a chart diagram of a $^{29}$Si-NMR spectrum of low oxygen-type silicon nanoparticles of Example 4.
FIG. 7 is a transmission electron microscopic (TEM) image of low oxygen-type silicon nanoparticles of Comparative Example 1.

Description of Embodiments

<Low Oxygen-type Silicon nanoparticle-Containing Slurry>

A low oxygen-type silicon nanoparticle-containing slurry according to the present invention contains low oxygen-type silicon nanoparticles, a nonaqueous solvent, and an additive. The following describes each component. The method for producing the low oxygen-type silicon nanoparticle-containing slurry is as in Step 1 in a method for producing a negative electrode active material for a lithium-ion secondary battery described below.

(Low Oxygen-type Silicon nanoparticles)

The low oxygen-type silicon nanoparticles have a ratio of a peak area (ii) in a range of -100 to -110 ppm to a peak area (i) in a range of -75 to -85 ppm [a (ii)/(i) ratio] of 1.0 or less in $^{29}$Si-NMR. The peak area (i) originates from Si (zero-valent), whereas the peak area (ii) originates from Si (other than zero-valent) such as $SiO_2$ and $SiO_4$. The (ii)/(i) ratio as the peak area ratio being 1.0 or less means that the proportion of Si (zero-valent) is higher than that of Si (other than zero-valent) in the silicon nanoparticles, which indicates that oxidation does not proceed (being in a low oxidation state) in the silicon nanoparticles. The silicon nanoparticles are thus in the low oxygenation state, and thereby reductions in battery characteristics such as a reduction in capacity and a reduction in coulombic efficiency when made into a battery can be effectively inhibited. The (ii)/(i) ratio as the peak area ratio is preferably 0.01 to 0.8 and more preferably 0.01 to 0.5.
A $^{29}$Si-NMR spectrum of the low oxygen-type silicon nanoparticles can be obtained easily using a solid-state NMR apparatus, and the solid-state NMR measurement of the present specification is performed using an apparatus (JNM-ECA600) manufactured by JEOL Ltd.
The (ii)/(i) ratio as the peak area ratio can be calculated by the following method. For the peak area ratio, single-pulse measurement is performed on a solid-state NMR analyzer, the obtained solid-state NMR spectral data is subjected to Fourier transform, which is subjected to waveform separation using Gauss + Lorentz function. Next, based on the peak areas obtained by the waveform separation, the ratio of the peak area (ii) in a range of - 100 to -110 ppm to the peak area (i) in a range of -75 to - 85 ppm [the (ii)/(i) ratio] is determined.
The volume average particle size (d50) of the low oxygen-type silicon nanoparticles is preferably 10 to 200 nm, more preferably 10 to 100 nm, and even more preferably 20 to 80 nm. The volume average particle size (d50) of the low oxygen-type silicon nanoparticles can be measured by dynamic light scattering using a laser particle size analyzer or the like. The silicon particles with a large size exceeding 200 nm form large lumps, easily cause a pulverization phenomenon during charging and discharging, and are thus assumed to tend to reduce the charge-discharge performance of the active material. On the other hand, the silicon particles with a small size less than 10 nm are extremely fine, and thus the silicon particles easily aggregate with each other. Thus, it becomes difficult to uniformly disperse the small silicon particles into the active material, and in addition, the surface active energy of the small particles is high, and there is a tendency for more by-products and the like to form on the surface of the small silicon particles by high-temperature firing of the active material, which leads to a significant decrease in charge-discharge performance.
The low oxygen-type silicon nanoparticles preferably have a sheet shape and preferably have a length in a long axis direction of 50 to 300 nm and a thickness of 1 to 60 nm. In the present invention, the sheet shape indicates, in particular, that the thickness/length (what is called an aspect ratio) is 0.5 or less. The silicon particles with a large size with an aspect ratio exceeding 0.5 form large lumps, easily cause a pulverization phenomenon during charging and discharging, and are thus assumed to tend to reduce the charge-discharge performance of the active material.
As to the morphology of the silicon nanoparticles having a sheet shape, their average particle size can be measured by dynamic light scattering. By using analytic means such as a transmission electron microscope (TEM) or a field emission scanning electron microscope (FE-SEM), the morphology (size, shape, and the like) of a sample such as the thickness/length described above can be identified more easily and precisely. In the case of negative electrode active material powder encapsulating sheet-shaped silicon nanoparticles, a sample can be cut with a focused ion beam (FIB), and its section can be observed with an FE-SEM, or the sample can be sliced to identify the state of the silicon particles by TEM observation.
The size range of the low oxygen-type silicon nanoparticles defined in the present invention is a calculation result based on 50 particles in a main part of the sample within the field of view in a TEM image. Because of the limitations of the field of view of observation, it is acceptable for the low oxygen-type silicon nanoparticles according to the present

invention to have sizes outside the above range.

The low oxygen-type silicon nanoparticles may have a thin film of silicon oxide on the surfaces or be covered with a metal oxide other than silicon oxide. The type of this metal oxide is not limited to a particular metal oxide. Examples thereof include titanium dioxide, manganese oxide, alumina, and zinc oxide. The thickness of the oxide thin film is not limited to a particular thickness so long as it does not prevent lithium ion conduction and electron transition during charging and discharging, which is preferably 10 nm or less.

(Nonaqueous Solvent)

The nonaqueous solvent is preferably a hydrocarbon-based, ketone-based, ester-based, or ether-based solvent in order to inhibit oxidation caused by the reaction of metallic silicon and water. In view of the capability of inhibiting silicon surface oxidation in particular, a ketone-based solvent such as methyl ether ketone (MEK) is preferred. The proportion of the nonaqueous solvent is, for example, 100 to 1,000 parts by mass and preferably 200 to 800 parts by mass with respect to 100 parts by mass of the low oxygen-type silicon nanoparticles. The low oxygen-type silicon nanoparticle-containing slurry according to the present invention preferably contains the nonaqueous solvent in a proportion so as to give the viscosity and the nonvolatile component at 110°C of the low oxygen-type silicon nanoparticle-containing slurry in ranges described below.

(Additive)

The additive is preferably a cationic surfactant, an anionic surfactant, or an amphoteric surfactant. Examples of the cationic surfactant include surfactants having an amide group, a primary, secondary, or tertiary amine, an imine, or an enamine as a polar group. Examples of the anionic surfactant include surfactants having a carboxy group, a sulfonic acid group, a sulfate group, or a phosphate group as a polar group. Among them, the additive preferably contains the cationic surfactant and/or the anionic surfactant.

The amine value of the cationic surfactant is, for example, 1 to 100 mgKOH/g, preferably 5 to 80 mgKOH/g, more preferably 10 to 48 mgKOH/g, and particularly preferably 35 to 48 mgKOH/g. When the amine value is within the above range, the silicon particles nanosized through pulverization are inhibited from agglomerating again, and thus the viscosity of the slurry can be reduced, resulting in excellence in cycle characteristics, charge-discharge capacity, and initial coulombic efficiency in a battery.

The acid value of the anionic surfactant is, for example, 1 to 200 mgKOH/g, preferably 10 to 180 mgKOH/g, and more preferably 50 to 150 mgKOH/g. When the acid value is within the above range, the wettability of the silicon particles to a dispersion medium improves, and thus the viscosity of the slurry can be reduced, resulting in excellence in cycle characteristics, charge-discharge capacity, and initial coulombic efficiency in a battery.

The additive may be an amphoteric surfactant having the amine value and the acid value, or the cationic and anionic surfactants having the amine value and the acid value may be used in combination. The content ratio when they are used in combination is particularly preferably 5/35 to 35/5 in terms of a cationic/anionic mass ratio. When the surfactants are used in combination in this ratio, the wettability of the silicon particles to the dispersion medium is improved, nanosizing proceeds, and the silicon particles nanosized through pulverization are inhibited from agglomerating again, and thus the viscosity of the slurry can be reduced, resulting in excellence in cycle characteristics, charge-discharge capacity, and initial coulombic efficiency in a battery.

The proportion of the additive is, for example, 5 to 60 parts by mass, preferably 10 to 40 parts by mass, and more preferably 20 to 40 parts by mass with respect to 100 parts by mass of the low oxygen-type silicon nanoparticles. If the addition amount is less than 5 parts by mass, the agglomeration of the silicon particles occurs, and nanosizing does not proceed, and thus the viscosity of the slurry cannot be reduced, resulting in inferiority in cycle characteristics, charge-discharge capacity, and initial coulombic efficiency in a battery. Even if the addition amount exceeds 60 parts by mass, there is no significant difference in battery performance as described above, but problems can occur during production, such as time-consuming pulverization.

The low oxygen-type silicon nanoparticle-containing slurry according to the present invention may contain silane coupling agents, defoaming agents, leveling agents, viscosity regulators, and the like as other components apart from the above components.

The viscosity of the low oxygen-type silicon nanoparticle-containing slurry according to the present invention is preferably 10 mPa·s or less, more preferably 0.5 to 5 mPa·s, and even more preferably 1.0 to 4 mPa·s. The low oxygen-type silicon nanoparticle-containing slurry according to the present invention is less likely to increase in viscosity due to the inclusion of the additive, and the silicon particles can be made fine to a nano size by pulverizing them in the presence of the additive. By making the silicon particles fine to a nano size, a negative electrode active material containing them in a silicon-based inorganic compound (an SiOC/C matrix, for example) can control an expansion rate, thus providing excellence in cycle characteristics, charge-discharge capacity, and initial coulombic efficiency when made into a battery.

The low oxygen-type silicon nanoparticle-containing slurry according to the present invention has a nonvolatile content at 110°C of preferably 5 to 40% by weight, more preferably 8 to 30% by weight, and even more preferably 10 to 25% by weight. The low oxygen-type silicon nanoparticle-containing slurry according to the present invention can inhibit an increase in viscosity due to the additive, can thus make the proportion of the nonvolatile component higher than that of conventional slurries, and can improve cycle characteristics, charge-discharge capacity, and initial coulombic efficiency when made into a battery.

<Negative Electrode Active Material for Lithium-Ion Secondary Battery>

A negative electrode active material for a lithium-ion secondary battery according to the present invention contains the low oxygen-type silicon nanoparticle-containing slurry according to the present invention as part of raw materials. The negative electrode active material for a lithium-ion secondary battery according to the present invention may contain low oxygen-type silicon nanoparticles having a ratio of a peak area (ii) in a range of -100 to - 110 ppm to a peak area (i) in a range of -75 to -85 ppm [a (ii)/(i) ratio] of 1.0 or less in $^{29}$Si-NMR. The low oxygen-type silicon nanoparticles are as described above.

The negative electrode active material for a lithium-ion secondary battery according to the present invention preferably contains a silicon-based inorganic compound together with the low oxygen-type silicon nanoparticles. The low oxygen-type silicon nanoparticles can be added to known and customary negative electrode active materials. The negative electrode active material for a lithium-ion secondary battery according to the present invention preferably contains the low oxygen-type silicon nanoparticles and the other silicon-based inorganic compound, in which the low oxygen-type silicon nanoparticles preferably have a structure encapsulated in the other silicon-based inorganic compound. Examples of the other silicon-based inorganic compound encapsulating the silicon nanoparticles include silicon carbide (SiC) and silicon oxycarbide (SiOC).

In the silicon-based inorganic compound, free carbon is present together with an Si-O-C skeleton structure in silicon oxycarbide. It is considered that the free carbon has excellent conductivity, and at the same time, if the contained carbon exists in a specific chemical bonding state, the crystalline/amorphous carbon structure of the carbon is well-balanced, and the Si-O-C skeleton structure and the free carbon can form a three-dimensional intertwined structure in the silicon-based inorganic compound, thus enabling flexible following of the volume change of the low oxygen-type nano silicon [silicon (zero-valent)] particles during charging and discharging when used for a battery negative electrode. This free carbon state can be evaluated by $^{13}$C-NMR measurement and is expressed using the equivalent ratio of $sp^2$ and $sp^3$. Note that the carbon in the Si-O-C skeleton structure is not detected because there is no C-C bond, and thus $^{13}$C-NMR measurement can detect only information on the carbon in the free carbon.

In the silicon-based inorganic compound for use in the negative electrode active material for a lithium-ion battery according to the present invention, as described above, not only the chemical bonding state of carbon but also the amount of presence of the free carbon has a significant effect on charge-discharge characteristics. An insufficient amount of carbon may result in poor conductivity and deteriorated charge-discharge characteristics. On the other hand, if the amount of carbon is extremely large, the charge-discharge capacity of the active material as a whole decreases because the theoretical capacity of the free carbon itself is low.

In the silicon-based inorganic compound, the free carbon present in other than the Si-O-C skeleton is easily thermally decomposed in the air, and the amount of presence of the free carbon can be calculated by a thermal weight loss value. The thermal decomposition weight loss is easily identified by using a thermogravimeter-differential thermal analyzer (TG-DTA). On the other hand, the "C" in the Si-O-C skeleton has very strong chemical bonds, making it highly thermally stable and very difficult to be oxidized and decomposed.

The free carbon in the present invention has a structure similar to that of hard carbon and causes a rapid weight loss as it is thermally decomposed in the air in an approximate temperature range of 600°C to 900°C. While the highest temperature for the TG-DTA measurement is not limited to a particular temperature, in order to ensure a thermal decomposition reaction, the TG-DTA measurement is preferably performed under the condition in the air up to 1,000°C. For the reasons described above, the obtained weight loss value indicates the amount of presence of the free carbon. The carbon amount in the present invention is in a range of 5 to 60% by mass and is more preferably 8 to 50% by mass.

[Method for Producing Negative Electrode Active Material for Lithium-Ion Secondary Battery]

The negative electrode active material for a lithium-ion secondary battery according to the present invention can be produced by Steps 1 to 4 below, for example, although there are no particular limitations.

Step 1: a step of obtaining the low oxygen-type silicon nanoparticle-containing slurry according to the present invention

Step 2: a step of mixing together and dispersing the low oxygen-type silicon nanoparticle-containing slurry obtained

in Step 1, a polysiloxane compound, and a carbon source resin and drying them to obtain a mixture (precursor)
Step 3: a step of firing the mixture (precursor) obtained in Step 2 in an inert atmosphere to obtain a fired product
Step 4: a step of pulverizing the fired product obtained in Step 3 to obtain a negative electrode active material

(Step 1)

The step of obtaining the low oxygen-type silicon nanoparticle-containing slurry is not limited to a particular method. A method of adding commercially available metallic silicon fine particles and the additive to the nonaqueous solvent and performing dispersion processing by pulverizing or a method of adding pulverized commercially available metallic silicon fine particles and the additive to the nonaqueous solvent and dispersing them may be used. As to the dispersion processing by pulverizing, although dry pulverization may be used, wet pulverization is preferred because it has an effect of effectively preventing an oxidation reaction of the silicon particles during pulverization. As to a pulverization apparatus, which is not limited to a particular apparatus, jet mills, ball mills, bead mills, and the like can be used. As to the pulverizing, it is preferable to perform the dispersion processing using a wet bead mill because it can efficiently obtain the low oxygen-type silicon nanoparticles.
The dispersion processing is preferably performed in an inert gas atmosphere such as nitrogen or argon in order to inhibit oxidation of the silicon particles.
The metallic silicon fine particles as a raw material for the low oxygen-type silicon nanoparticles are preferably those with a silicon purity of 97% or more and more preferably 99.0% or more. As the additive and the nonaqueous solvent, those described above can be used. The use amounts of the additive and the nonaqueous solvent are also as described above. The viscosity and the nonvolatile content at 110°C of the low oxygen-type silicon nanoparticle-containing slurry are preferably adjusted to the ranges described above. The average particle size of the obtained low oxygen-type silicon nanoparticles is preferably 10 to 200 nm, more preferably 10 to 100 nm, and even more preferably 20 to 80 nm.
A silane coupling agent can also be used in the pulverizing in order to further improve the dispersibility of the silicon particles. The silane coupling agent is an organosilicon compound having in the molecule both a functional group reactively bonding with an organic material and a functional group reactively bonding with an oxide film of silicon, and its structure is generally shown as follows: Y-R-Si-$(X)_3$. Here, Y is the functional group reactively bonding with the organic material, and representative examples thereof include a vinyl group, an epoxy group, and an amino group. X is the functional group reacting with the oxide film of silicon and is hydrolyzed by water or moisture to form silanol, and this silanol reactively bonds with the oxide film on silicon. Representative examples of X include an alkoxy group, an acetoxy group, and a chlorine atom.

(Step 2)

In Step 2, the low oxygen-type silicon nanoparticle-containing slurry obtained in Step 1, the polysiloxane compound, and the carbon source resin are mixed together and dispersed and are then dried to obtain the mixture (precursor).
The polysiloxane compound is not limited to a particular compound so long as it is a resin containing at least one of a polycarbosilane structure, a polysilazane structure, a polysilane structure, and a polysiloxane structure. The polysiloxane compound may be a single resin of these structures or a composite resin having one of them as a segment and chemically bonding with another polymer segment. There are copolymers with graft, block, random, alternating, and the like as the forms of combination. Examples thereof include a composite resin having a graft structure chemically bonding with a polysiloxane segment and a side chain of the polymer segment and a composite resin having a block structure in which the polysiloxane segment chemically bonds with the end of the polymer segment.
The polysiloxane segment preferably has a structural unit represented by General Formula (S-1) below and/or General Formula (S-2) below.

[Chemical Formula 1]

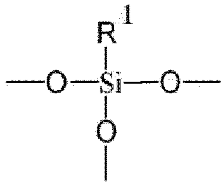

(S-1)

[Chemical Formula 2]

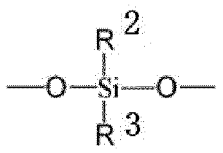 (S-2)

(In General Formulae (S-1) and (S-2) above, $R^1$ represents an aromatic hydrocarbon substituent or an alkyl group. $R^2$ and $R^3$ each indicate an alkyl group, a cycloalkyl group, an aryl group, or an aralkyl group.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group. Examples of the cycloalkyl group include a cyclopropyl group, a cyclobutyl group, a cyclopentyl group, and a cyclohexyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the polymer segment that the polysiloxane compound has, other than the polysiloxane segment, include polymer segments such as vinyl polymer segments such as acrylic polymers, fluoro olefin polymers, vinyl ester polymers, aromatic vinyl polymers, and polyolefin polymers, polyurethane polymer segments, polyester polymer segments, and polyether polymer segments. Among them, vinyl polymer segments are preferred.

The polysiloxane compound may be a composite resin in which the polysiloxane segment and the polymer segment bond with each other in the structure shown by Structural Formula (S-3) below and may have a three-dimensional reticulate polysiloxane structure.

[Chemical Formula 3]

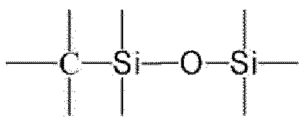 (S-3)

(In the formula, the carbon atom is a carbon atom forming the polymer segment, and the two silicon atoms are silicon atoms forming the polysiloxane segment.)

The polysiloxane segment of the polysiloxane compound may have a functional group in the polysiloxane segment that can react upon heating, such as a polymerizable double bond. Heat treatment on the polysiloxane compound prior to thermal decomposition allows a cross-linking reaction to proceed, making it solid, which can facilitate thermal decomposition treatment.

Examples of the polymerizable double bond include a vinyl group and a (meth)acryloyl group. Two or more polymerizable double bonds are preferably present in the polysiloxane segment, 3 to 200 are more preferably present, and 3 to 50 are even more preferably present. By using a composite resin with two or more polymerizable double bonds as the polysiloxane compound, a cross-linking reaction can be easily caused to proceed.

The polysiloxane segment may have a silanol group and/or a hydrolyzable silyl group. Examples of a hydrolyzable group in the hydrolyzable silyl group include halogen atoms, an alkoxy group, a substituted alkoxy group, an acyloxy group, a phenoxy group, a mercapto group, an amino group, an amide group, an aminooxy group, an iminooxy group, and an alkenyloxy group. These groups are hydrolyzed, whereby the hydrolyzable silyl group become a silanol group. In parallel with the thermosetting reaction, a hydrolytic condensation reaction proceeds between the hydroxy group in the silanol group and the hydrolyzable group in the hydrolyzable silyl group to obtain a solid polysiloxane compound.

The silanol group referred to in the present invention is a silicon-containing group having a hydroxy group directly bonding with the silicon atom. The hydrolyzable silyl group referred to in the present invention is a silicon-containing group having a hydrolyzable group directly bonding with the silicon atom. Specific examples thereof include a group represented by General Formula (S-4) below.

[Chemical Formula 4]

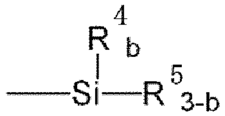

(S - 4)

(In the formula, $R^4$ is a monovalent organic group such as an alkyl group, an aryl group, or an aralkyl group, and $R^5$ is a halogen atom, an alkoxy group, an acyloxy group, an allyloxy group, a mercapto group, an amino group, an amide group, an aminooxy group, an iminooxy group, or an alkenyloxy group. b is an integer of 0 to 2.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the halogen atom include a fluorine atom, a chlorine atom, a bromine atom, and an iodine atom.

Examples of the alkoxy group include a methoxy group, an ethoxy group, a propoxy group, an isopropoxy group, a butoxy group, a secondary butoxy group, and a tertiary butoxy group.

Examples of the acyloxy group include formyloxy, acetoxy, propanoyloxy, butanoyloxy, pivaloyloxy, pentanoyloxy, phenylacetoxy, acetoacetoxy, benzoyloxy, and naphthoyloxy.

Examples of the allyloxy group include phenyloxy and naphthyloxy.

Examples of the alkenyloxy group include a vinyloxy group, an allyloxy group, a 1-propenyloxy group, an isopropenyloxy group, a 2-butenyloxy group, a 3-butenyloxy group, a 2-pentenyloxy group, a 3-methyl-3-butenyloxy group, and a 2-hexenyloxy group.

Examples of the polysiloxane segment having the structural units indicated by General Formula (S-1) above and/or General Formula (S-2) above include those having the following structures.

[Chemical Formula 5]

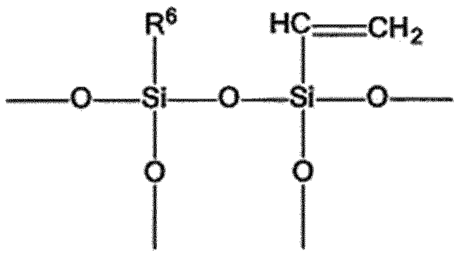

(1)

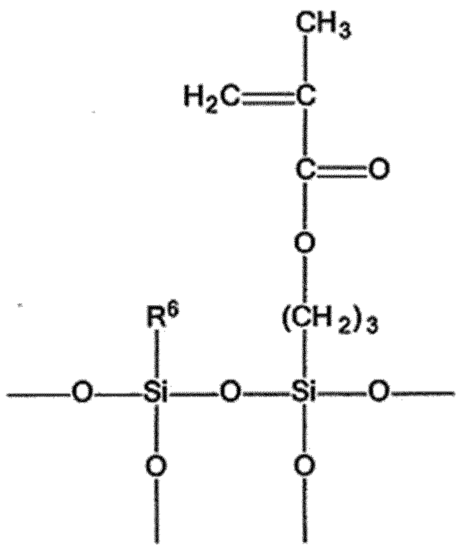

(2)

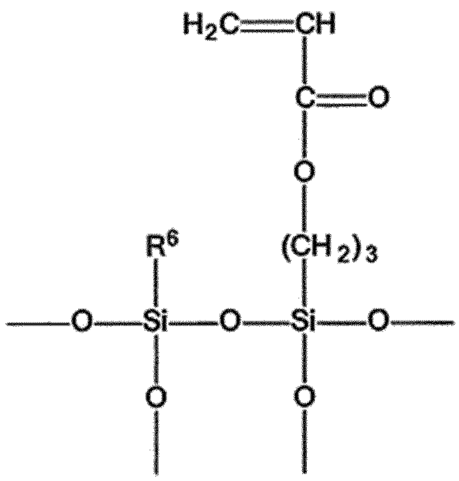

(3)

[Chemical Formula 6]

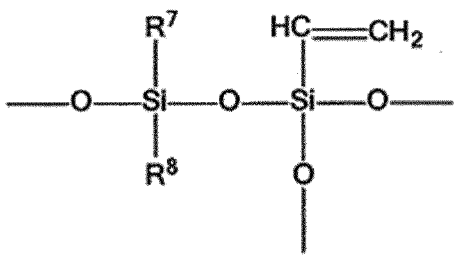

(4)

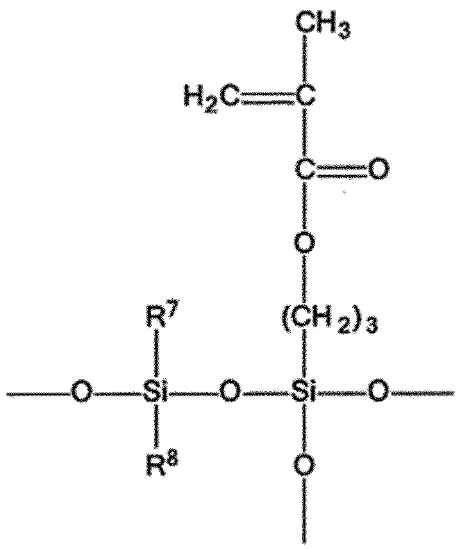
(5)

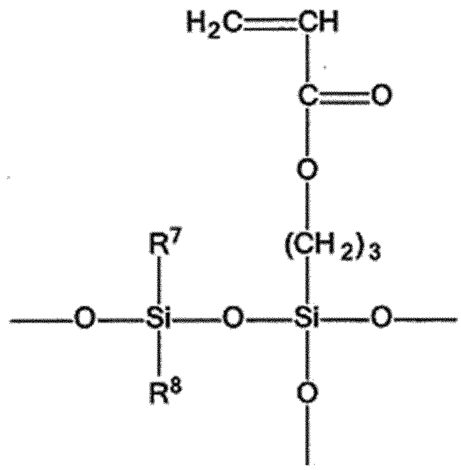
(6)

[Chemical Formula 7]

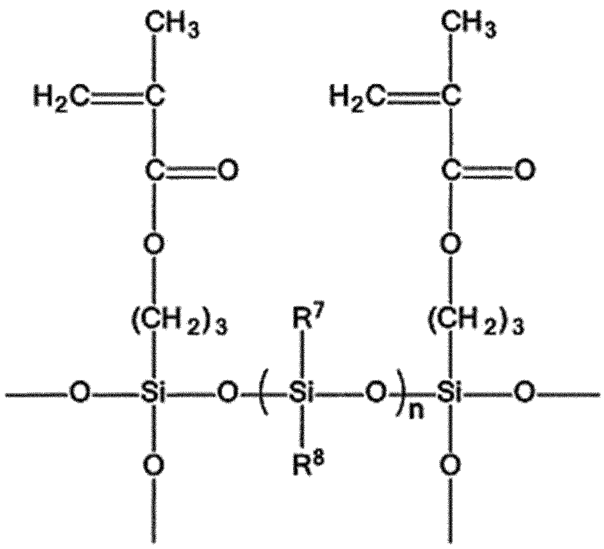
(7)

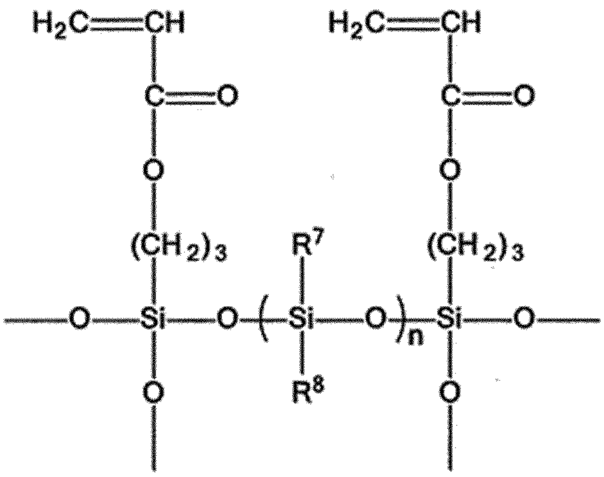

(8)

The polymer segment may have various functional groups as needed to the extent that they do not impair the advantageous effects of the present invention. Examples of such functional groups include a carboxy group, a blocked carboxy group, a carboxylic anhydride group, a tertiary amino group, a hydroxy group, a blocked hydroxy group, a cyclocarbonate group, an epoxy group, a carbonyl group, a primary amide group, secondary amide, a carbamate group, and a functional group represented by Structural Formula (S-5) below.

[Chemical Formula 8]

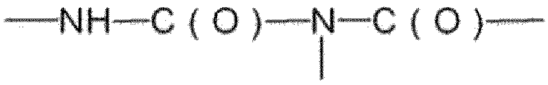

(S - 5)

The polymer segment may also have a polymerizable double bond such as a vinyl group or a (meth)acryloyl group.

The polysiloxane compound for use in the present invention can be produced by known methods. Among them it is preferably produced by the methods shown in (1) to (3) below. However, these are not limiting.

(1) A method of preparing a polymer segment containing a silanol group and/or a hydrolyzable silyl group as a raw material for the polymer segment in advance, mixing this polymer segment and a silane compound containing a silane compound containing a silanol group and/or a hydrolyzable silyl group and a polymerizable double bond together, and performing a hydrolytic condensation reaction.

(2) This method prepares a polymer segment containing a silanol group and/or a hydrolyzable silyl group as a raw material for the polymer segment in advance. A silane compound containing a silane compound containing a silanol group and/or a hydrolyzable silyl group and a polymerizable double bond is subjected to a hydrolytic condensation reaction to also prepare polysiloxane in advance. Then, the polymer segment and polysiloxane are mixed together, and a hydrolytic condensation reaction is performed.

(3) A method of mixing the polymer segment, a silane compound containing a silane compound containing a silanol group and/or a hydrolyzable silyl group and a polymerizable double bond, and polysiloxane together and performing a hydrolytic condensation reaction.

While the carbon source resin is not limited to a particular resin so long as it has good miscibility with the polysiloxane compound and can be carbonized by high-temperature firing in an inert atmosphere, synthetic resins having aromatic functional groups as well as natural chemical raw materials are preferably used. From the viewpoint of availability at low prices and exclusion of impurities, phenolic resins are more preferably used.

Examples of the synthetic resins include thermoplastic resins such as polyvinyl alcohol and polyacrylic acid and thermosetting resins such as phenolic resins and furan resins. Examples of the natural chemical raw materials include heavy oils, especially tar pitches such as coal tar, tar light oil, tar medium oil, tar heavy oil, naphthalene oil, anthracene oil, coal tar pitch, pitch oil, mesophase pitch, oxygen cross-linked petroleum pitch, and heavy oil.

In Step 2, the low oxygen-type silicon nanoparticle-containing slurry obtained in Step 1, the polysiloxane compound, and the carbon source resin are uniformly mixed together, and then the mixture (precursor) is obtained through desolventing and drying. In mixing the raw materials together, apparatuses having general-purpose dispersing and

mixing functions can be used, although there are no particular limitations. Examples of them include stirrers, ultrasonic mixers, and premix dispersion machines. In the desolventing and drying operations for the purpose of distilling off an organic solvent, dryers, vacuum dryers, spray dryers, or the like can be used.

With respect to the weight of this precursor, it is preferable to set the addition amount of the silicon particles to 3 to 50% by mass, to contain 15 to 85% by mass of the solid content of the polysiloxane compound, and to set the solid content of the carbon source resin to 3 to 70% by mass, and it is more preferable to set the addition amount of the solid content of the silicon particles to 8 to 40% by mass, the solid content of the polysiloxane compound to 20 to 70% by mass, and the solid content of the carbon source resin to 3 to 60% by mass.

(Step 3)

Step 3 is a step of high-temperature firing the precursor obtained in Step 2 in an inert atmosphere to completely decompose thermally decomposable organic components and to make the other main components into a fired product suitable for the negative electrode active material according to the present invention by the precise control of the firing conditions. Specifically, the "Si-O" bonds present in the raw material polysiloxane compound form a Si-O-C skeleton structure by the progress of a dehydration condensation reaction by the energy of high-temperature treatment, and the carbon source resin, which has been homogenously dispersed, is carbonized to be converted as free carbon within a three-dimensional structure having the Si-O-C skeleton structure.

Step 3 is firing the precursor obtained in Step 2 in an inert atmosphere in line with a program of firing. The highest attainable temperature is the highest temperature to be set and has a strong influence on the structure and performance of the fired product. The highest attainable temperature in the present invention is preferably 1,020°C to 1,180°C and more preferably 1,070°C to 1,150°C. By performing firing in this temperature range, the microstructure of the material possessing the chemical bonding state of silicon and carbon described above can be well formed, and silicon oxidation by extremely high-temperature firing can also be avoided, and thus excellent charge-discharge characteristics can be obtained.

While the method of firing is not limited to a particular method, a reaction apparatus having a heating function in an atmosphere may be used, and continuous or batch processing is possible. As to the apparatus for firing, fluidized bed reactors, rotary furnaces, vertical moving bed reactors, tunnel furnaces, batch furnaces, rotary kilns, or the like can be selected as appropriate in accordance with the purpose.

Oxidation treatment may also be performed prior to the firing of the precursor described above. This oxidation treatment can impart a thin oxide film on the surface of silicon. When used for a battery, the exposure of the silicon surface to an electrolyte can be prevented, and there is an effect of inhibiting the decomposition of the electrolyte, and thus the cycle characteristics of the active material can be improved. The oxidation treatment condition is in a temperature range of preferably 200°C to 440°C and more preferably 300°C to 420°C in the air.

While the inert atmosphere described above is not limited to a particular atmosphere, it suffices if any oxidizing gas is not contained. Among them, nitrogen, argon, or the like can be used, and in addition, a nitrogen/hydrogen mixed gas, pure hydrogen, carbon monoxide, or the like as a reducing atmosphere can also be used.

(Step 4)

Step 4 is pulverizing the fired product obtained in Step 3 and performing classification as needed to obtain the negative electrode active material according to the present invention. Pulverization may be performed in one step or performed in several steps for a desired particle size. For example, when the fired product is in a lump or agglomerated particles of 10 mm or more, and the active material of 10 μm is to be produced, coarse pulverization is performed with a jaw crusher, a roll crusher, or the like to make particles of about 1 mm, which are then made to be 100 μm with a grow mill, a ball mill, or the like, which are then pulverized to 10 μm with a bead mill, a jet mill, or the like. To remove coarse particles that may be contained in the particles produced by pulverization or when fine particles are removed to adjust particle size distribution, classification is performed. The classifier used is a wind power classifier, a wet classifier, or the like, which varies in accordance with the purpose. In removing coarse particles, a method of classification including sifting is preferred because it can surely achieve the purpose.

By the method of Steps 1 to 4 above, the negative electrode active material for a lithium-ion secondary battery according to the present invention containing the low oxygen-type silicon nanoparticles having a ratio of a peak area (ii) in a range of -100 to -110 ppm to a peak area (i) in a range of -75 to -85 ppm [a (ii)/(i) ratio] of 1.0 or less in $^{29}$Si-NMR is obtained. The average particle size (dynamic light scattering) of the negative electrode active material obtained by the above method of production is preferably 500 nm to 50 μm, more preferably 1 μm to 40 μm, and even more preferably 2 to 20 μm.

[Method for Producing Negative Electrode for Lithium-Ion Secondary Battery]

A negative electrode for a lithium-ion secondary battery according to the present invention contains the negative electrode active material for a lithium-ion secondary battery according to the present invention. The negative electrode for a lithium-ion secondary battery according to the present invention is obtained by applying a slurry containing the negative electrode active material for a lithium-ion secondary battery according to the present invention and an organic binding agent as essential components and other components such as conductivity aids as needed onto a current collector copper foil to form a thin film. The negative electrode active material for a lithium-ion secondary battery according to the present invention contains the low oxygen-type silicon nanoparticles described above, and thus when it is used as a negative electrode, it exhibits favorable charge-discharge characteristics.

The negative electrode can also be produced by adding known and customary carbon materials such as graphite to the slurry. Examples of these carbon materials such as graphite include natural graphite, artificial graphite, hard carbon, and soft carbon.

The thus obtained negative electrode contains the negative electrode active material according to the present invention as the active material and is thus a negative electrode for a secondary battery having high capacity and excellent cycle characteristics and also having excellent initial coulombic efficiency. The negative electrode can be obtained by kneading the negative electrode active material for a secondary battery described above and a binder as the organic binding agent together with a solvent with a dispersion apparatus such as a stirrer, a ball mill, a super sand mill, or a pressure kneader to prepare a negative electrode material slurry, which is then applied to a current collector to form a negative electrode layer, for example. It can also be obtained by forming the paste-like negative electrode material slurry into a sheet shape, a pellet shape, or the like and integrating it with the current collector.

The organic binding agent is not limited to a particular organic binding agent. Examples thereof include styrene-butadiene rubber copolymers (SBR); (meth)acrylic copolymers containing ethylenically unsaturated carboxylic esters (methyl (meth)acrylate, ethyl (meth)acrylate, butyl (meth)acrylate, (meth)acrylonitrile, and hydroxyethyl (meth)acrylate, for example) and ethylenically unsaturated carboxylic acids (acrylic acid, methacrylic acid, itaconic acid, fumaric acid, and maleic acid, for example); and polymer compounds such as polyvinylidene fluoride, polyethylene oxide, polyepichlorohydrin, polyphosphazene, polyacrylonitrile, polyimide, polyamideimide, and carboxymethylcellulose (CMC). Water-based binders with high chemical stability can also be employed as the organic binding agent.

These organic binding agents are dispersed or dissolved in water or dissolved in an organic solvent such as N-methyl-2-pyrrolidone (NMP) depending on their physical properties. The content ratio of the organic binding agent in a negative electrode layer of a lithium-ion secondary battery negative electrode is preferably 1 to 30% by mass, more preferably 2 to 20% by mass, and even more preferably 3 to 15% by mass.

The content ratio of the organic binding agent being 1% by mass or more gives good adhesion and inhibits the destruction of a negative electrode structure due to expansion and contraction during charging and discharging. On the other hand, being 30% by mass or less inhibits an increase in electrode resistance.

The negative electrode material slurry may be mixed with a conductivity aid as needed. Examples of the conductivity aid include carbon black, graphite, acetylene black, and oxides and nitrides exhibiting conductivity. The use amount of the conductivity aid may be about 1 to 15% by mass with respect to the negative electrode active material according to the present invention.

The material and shape of the current collector are not limited to particular ones. A strip of copper, nickel, titanium, stainless steel, or the like formed into a foil shape, a perforated foil shape, a mesh shape, or the like may be used. Porous materials such as porous metal (foamed metal) and carbon paper can also be used.

The method for applying the negative electrode material slurry to the current collector is not limited to a particular method. Examples thereof include known methods such as metal mask printing, electrostatic coating, dip coating, spray coating, roll coating, doctor blading, gravure coating, and screen printing. After the application, rolling treatment with a flat press, a calender roll, or the like is preferably performed as needed.

Integration of the negative electrode material slurry formed into a sheet shape, a pellet shape, or the like with the current collector can be performed by known methods such as rolling, pressing, or a combination of these methods.

The negative electrode layer formed on the current collector and the negative electrode layer integrated with the current collector are preferably heat treated in accordance with the used organic binding agent. For example, when a known and customary water-based styrene-butadiene rubber copolymer (SBR) or the like is used, heat treatment may be performed at 100 to 130°C, whereas when an organic binding agent with polyimide or polyamideimide as its main skeleton is used, heat treatment is preferably performed at 150 to 450°C.

This heat treatment advances removal of the solvent and higher strength due to the hardening of the binder, which can improve adhesion between particles and between the particles and the current collector. This heat treatment is preferably performed in an inert atmosphere such as helium, argon, or nitrogen or a vacuum atmosphere in order to prevent oxidation of the current collector during the treatment.

The negative electrode is preferably pressed (subjected to pressurization) after the heat treatment. A negative

electrode for a secondary battery containing the negative electrode active material according to the present invention has an electrode density of preferably 1.0 to 1.8 g/cm$^3$, more preferably 1.1 to 1.7 g/cm$^3$, and even more preferably 1.2 to 1.6 g/cm$^3$. As to the electrode density, although higher density tends to improve adhesion and the volume capacity density of the electrode, extremely high density reduces the number of voids in the electrode, thereby weakening the volume expansion inhibition effect of silicon or the like, thus reducing cycle characteristics.

[Configuration of Lithium-Ion Secondary Battery (Full Battery)]

As described above, the negative electrode containing the negative electrode active material for a lithium-ion secondary battery according to the present invention has excellent charge-discharge characteristics and is thus preferably used for nonaqueous electrolyte secondary batteries and solid electrolyte secondary batteries and exhibits excellent performance when used as the negative electrode of nonaqueous electrolyte secondary batteries in particular, although there are no particular limitations so long as the batteries are secondary batteries.

A lithium-ion secondary battery according to the present invention includes a negative electrode for a lithium-ion secondary battery containing the negative electrode active material for a lithium-ion secondary battery according to the present invention. For example, when used for a wet electrolyte secondary battery, the wet electrolyte secondary battery can be configured by placing a positive electrode and the negative electrode according to the present invention facing each other via a separator and injecting an electrolyte. By assembling a secondary battery according to this configuration, the lithium-ion secondary battery according to the present invention can be produced.

The positive electrode can be obtained by forming a positive electrode layer on the surface of a current collector in the same manner as in the negative electrode. For the current collector of this case, a strip of metal or alloy such as aluminum, titanium, or stainless steel formed into a foil shape, a perforated foil shape, a mesh shape, or the like can be used.

The positive electrode material for use in the positive electrode layer is not limited to a particular material. Among nonaqueous electrolyte secondary batteries, when a lithium-ion secondary battery is produced, metallic compounds, metal oxides, metal sulfides, or conductive polymer materials capable of doping or intercalating lithium ions may be used, for example, with no particular limitations. Examples thereof include lithium cobaltate ($LiCoO_2$), lithium nickelate ($LiNiO_2$), lithium manganate ($LiMnO_2$), their composite oxides ($LiCoxNiyMnzO_2$, x + y + z = 1), lithium manganese spinel ($LiMn_2O_4$), lithium vanadium compounds, $V_2O_5$, $V_6O_{13}$, $VO_2$, $MnO_2$, $TiO_2$, $MoV_2O_8$, TiS2, $V_2S_5$, VS2, $MoS_2$, $MoS_3$, $Cr_3O_8$, $Cr_2O_5$, olivine type $LiMPO_4$ (M: Co, Ni, Mn, and Fe), conductive polymers such as such as polyacetylene, polyaniline, polypyrrole, polythiophene, and polyacene, and porous carbon, which can be used singly or in mixture.

As the separator, nonwoven fabrics, cloth, microporous films, or combinations thereof mainly made of polyolefins such as polyethylene and polypropylene can be used, for example. When a structure in which the positive electrode and the negative electrode of the nonaqueous electrolyte secondary battery to be produced are not in direct contact is employed, there is no need to use any separator.

As the electrolyte, for example, what is called an organic electrolyte can be used, in which a lithium salt such as $LiClO_4$, $LiPF_6$, $LiAsF_6$, $LiBF_4$, or $LiSO_3CF_3$ is dissolved in a nonaqueous solvent as a single body or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, $\gamma$-butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyl tetrahydrofuran, 1,3-dioxolane, methyl acetate, or ethyl acetate.

While the structure of the lithium-ion secondary battery according to the present invention is not limited to a particular structure, it is generally structured by winding the positive electrode, the negative electrode, and the separator, which is provided as needed, into a flat spiral shape to make a wound electrode plate group or stacking them into a flat plate shape to make a laminated electrode plate group and encapsulating these electrode plate groups in an outer casing.

The lithium-ion secondary battery according to the present invention is used as, with no particular limitations, paper batteries, button batteries, coin batteries, laminated batteries, cylindrical batteries, square batteries, and the like. The negative electrode active material for a lithium-ion secondary battery according to the present invention described above can also be applied to electrochemical apparatuses in general using insertion and desorption of lithium ions as a charge-discharge mechanism, such as hybrid capacitors and solid lithium secondary batteries.

[Examples]

Silicon particle-containing slurries were produced by the methods described in Examples 1 to 4 and Comparative Examples 1 and 2 below, and in addition, half-cell batteries were produced by the methods of Examples 5 to 8 and Comparative Example 3. The properties of the additives and the silicon particle slurries are as listed in Table 1 below, whereas the battery characteristics are as listed in Table 2 below.

(Example 1: Production of Silicon Particle-Containing Slurry)

Commercially available elementary silicon power (manufactured by Kojundo Chemical, purity: 99.9%, average particle size: 2 to 4 μm) in an amount of 70 g, 28 g of Additive 1, and 392 g of MEK were mixed together and were well stirred. This liquid mixture was subjected to wet pulverization processing for 6 hours using Ultra Apex Mill UAM-015 manufactured by Hiroshima Metal & Machinery Co., Ltd. to obtain a slurry containing silicon particles with an average particle size (d50) of 53.9 nm and having a viscosity of 1.84 mPa·s and a nonvolatile component at 110°C of 20.0%. The obtained slurry had uniform dispersion of nanosized silicon particles in a dispersion medium (nanosizing "O"). The methods for measuring the average particle size (d50) and viscosity are as follows. The ratio of the peak area (ii) in a range of -100 to -110 ppm to the peak area (i) in a range of -75 to -85 ppm in $^{29}$Si-NMR of the silicon particles (the (ii)/(i) ratio) performed by "Methods of Measurement and Analysis of $^{29}$Si-NMR" below was 0.43. Table 1 lists the slurry properties, FIG. 1 illustrate a chart diagram of a $^{29}$Si-NMR spectrum, and FIG. 2 illustrates a transmission electron microscopic (TEM) image of the silicon particles.

(Example 2: Production of Silicon Particle-Containing Slurry)

A slurry was produced in the same manner as in Example 1 except that Additive 2 was used in place of Additive 1 to obtain the slurry containing silicon particles with an average particle size (d50) of 44.9 nm and having a viscosity of 2.40 mPa·s and a nonvolatile content at 110°C of 20.3%. The $^{29}$Si-NMR peak area ratio [the (ii)/(i) ratio] of the silicon particles in the slurry was 0.23. Table 1 lists the slurry properties, and FIG. 3 illustrates a chart diagram of a $^{29}$Si-NMR spectrum.

(Example 3: Production of Silicon Particle-Containing Slurry)

A slurry was produced in the same manner as in Example 1 except that Additive 3 was used in place of Additive 1 to obtain the slurry containing silicon particles with an average particle size (d50) of 62.0 nm and having a viscosity of 1.97 mPa·s and a nonvolatile content at 110°C of 20.1%. The $^{29}$Si-NMR peak area ratio [the (ii)/(i) ratio] of the silicon particles in the slurry was 0.76. Table 1 lists the slurry properties, FIG. 4 illustrate a chart diagram of a $^{29}$Si-NMR spectrum, and FIG. 5 illustrates a transmission electron microscopic (TEM) image of the silicon particles.

(Example 4: Production of Silicon Particle-Containing Slurry)

A slurry was produced in the same manner as in Example 1 except that Additive 1 and Additive 2 were used in combination in place of Additive 1 to obtain the slurry containing silicon particles with an average particle size (d50) of 53.9 nm and having a viscosity of 1.59 mPa·s and a nonvolatile content at 110°C of 20.5%. The $^{29}$Si-NMR peak area ratio [the (ii)/(i) ratio] of the silicon particles in the slurry was 0.05. Table 1 lists the slurry properties, and FIG. 6 illustrates a chart diagram of a $^{29}$Si-NMR spectrum.

(Example 5: Production of Silicon Particle-Containing Slurry)

A slurry was produced in the same manner as in Example 1 except that Additive 1 was used with an additive amount of 5 parts to obtain the slurry containing silicon particles with an average particle size (d50) of 83.1 nm and having a viscosity of 9.21 mPa·s and a nonvolatile content at 110°C of 16.6%. The 29Si-NMR peak area ratio [the (ii)/(i) ratio] of the silicon particles in the slurry was 0.73.

(Example 6: Production of Silicon Particle-Containing Slurry)

A slurry was produced in the same manner as in Example 1 except that Additive 1 was used with an additive amount of 20 parts to obtain the slurry containing silicon particles with an average particle size (d50) of 57.8 nm and having a viscosity of 3.32 mPa·s and a nonvolatile content at 110°C of 18.3%. The 29Si-NMR peak area ratio [the (ii)/(i) ratio] of the silicon particles in the slurry was 0.56.

(Example 7: Production of Silicon Particle-Containing Slurry)

A slurry was produced in the same manner as in Example 1 except that Additive 1 was used with an additive amount of 60 parts to obtain the slurry containing silicon particles with an average particle size (d50) of 59.2 nm and having a viscosity of 1.45 mPa·s and a nonvolatile content at 110°C of 22.8%. The 29Si-NMR peak area ratio [the (ii)/(i) ratio] of the silicon particles in the slurry was 0.40.

(Example 8: Production of Silicon Particle-Containing Slurry)

A slurry was produced in the same manner as in Example 1 except that Additive 1 was used with an additive amount of 80 parts and the pulverization processing time was 8 hours to obtain the slurry containing silicon particles with an average particle size (d50) of 82.7 nm and having a viscosity of 1.38 mPa·s and a nonvolatile content at 110°C of 24.9%. The 29Si-NMR peak area ratio [the (ii)/(i) ratio] of the silicon particles in the slurry was 0.45.

(Example 9: Production of Silicon Particle-Containing Slurry)

A slurry was produced in the same manner as in Example 1 except that Additive 5 was used in place of Additive 1 to obtain the slurry containing silicon particles with an average particle size (d50) of 90.4 nm and having a viscosity of 3.96 mPa·s and a nonvolatile content at 110°C of 20.5%. The 29Si-NMR peak area ratio [the (ii)/(i) ratio] of the silicon particles in the slurry was 0.65.

(Example 10: Production of Silicon Particle-Containing Slurry)

A slurry was produced in the same manner as in Example 1 except that Additive 6 was used in place of Additive 1 to obtain the slurry containing silicon particles with an average particle size (d50) of 79.2 nm and having a viscosity of 5.93 mPa·s and a nonvolatile content at 110°C of 20.1%. The 29Si-NMR peak area ratio [the (ii)/(i) ratio] of the silicon particles in the slurry was 0.38.

(Example 11: Production of Silicon Particle-Containing Slurry)

A slurry was produced in the same manner as in Example 1 except that Additive 7 was used in place of Additive 1 to obtain the slurry containing silicon particles with an average particle size (d50) of 75.4 nm and having a viscosity of 1.83 mPa·s and a nonvolatile content at 110°C of 20.3%. The 29Si-NMR peak area ratio [the (ii)/(i) ratio] of the silicon particles in the slurry was 0.66.

(Example 12: Production of Silicon Particle-Containing Slurry)

A slurry was produced in the same manner as in Example 1 except that Additive 8 was used in place of Additive 1 to obtain the slurry containing silicon particles with an average particle size (d50) of 81.1 nm and having a viscosity of 2.90 mPa·s and a nonvolatile content at 110°C of 20.3%. The 29Si-NMR peak area ratio [the (ii)/(i) ratio] of the silicon particles in the slurry was 0.81.

(Example 13: Production of Silicon Particle-Containing Slurry)

A slurry was produced in the same manner as in Example 1 except that 98 g of commercially available elementary silicon powder (manufactured by Kojundo Chemical, purity: 99.9%, average particle size: 2 to 4 μm), 39.2 g of Additive 1, and 244 g of MEK were used to obtain the slurry containing silicon particles with an average particle size (d50) of 76.0 nm and having a viscosity of 6.52 mPa·s and a nonvolatile content at 110°C of 36.02%. The 29Si-NMR peak area ratio [the (ii)/(i) ratio] of the silicon particles in the slurry was 0.53.

(Example 14: Production of Silicon Particle-Containing Slurry)

A slurry was produced in the same manner as in Example 1 except that 112 g of commercially available elementary silicon powder (manufactured by Kojundo Chemical, purity: 99.9%, average particle size: 2 to 4 μm), 44.8 g of Additive 1, and 235 g of MEK were used to obtain the slurry containing silicon particles with an average particle size (d50) of 79.2 nm and having a viscosity of 7.22 mPa·s and a nonvolatile content at 110°C of 40.10%. The 29Si-NMR peak area ratio [the (ii)/(i) ratio] of the silicon particles in the slurry was 0.51.

(Comparative Example 1: Production of Silicon Particle-Containing Slurry)

A slurry was produced in the same manner as in Example 1 except that Additive 4 was used in place of Additive 1 to obtain the slurry containing silicon particles with an average particle size (d50) of 57.9 nm and having a viscosity of 13.4 mPa·s and a nonvolatile content at 110°C of 20.2%. The $^{29}$Si-NMR peak area ratio [the (ii)/(i) ratio] of the silicon particles in the slurry was 1.20. Table 1 lists the slurry properties, and FIG. 7 illustrates a transmission electron microscopic (TEM) image of the silicon particles.

(Comparative Example 2: Production of Silicon Particle-Containing Slurry)

A slurry was produced in the same manner as in Example 1 except that no additives were used to obtain the slurry containing silicon particles with an average particle size (d50) of 500 nm or more and having a viscosity of 30.0 mPa·s or more and a nonvolatile content at 110°C of 20.0%. The obtained slurry had coarse silicon particles and had no dispersibility to the dispersion medium (nanosizing "X"). Table 1 lists the slurry properties.

[Table 1]

| | Additive properties | | | Silicon particle slurry properties | | | | |
|---|---|---|---|---|---|---|---|---|
| | No. | Acid value | Amine value | Additive amount* | Viscosity [mPa·s] | Peak area ratio [(ii)/(i) ratio] | Particle size (d50) [nm] | Nanosizing |
| Example 1 | 1 | - | 35 | 40 | 1.84 | 0.43 | 53.9 | O |
| Example 2 | 2 | 129 | - | 40 | 2.40 | 0.23 | 44.9 | O |
| Example 3 | 3 | 35 | 50 | 40 | 1.97 | 0.76 | 62.0 | O |
| Example 4 | 1 + 3 | | | 40 | 1.59 | 0.05 | 53.9 | O |
| Example 5 | 1 | - | 35 | 5 | 9.21 | 0.73 | 83.1 | O |
| Example 6 | 1 | - | 35 | 20 | 3.32 | 0.56 | 57.8 | O |
| Example 7 | 1 | - | 35 | 60 | 1.45 | 0.40 | 59.2 | O |
| Example 8 | 1 | - | 35 | 80 | 1.38 | 0.45 | 82.7 | O |
| Example 9 | 5 | - | 10 | 40 | 3.96 | 0.65 | 90.4 | O |
| Example 10 | 6 | - | 80 | 40 | 5.93 | 0.38 | 79.2 | O |
| Example 11 | 7 | 8 | - | 40 | 1.83 | 0.66 | 75.4 | O |
| Example 12 | 8 | 190 | - | 40 | 2.90 | 0.81 | 81.1 | O |
| Example 13 | 1 | - | 35 | 40 | 6.52 | 0.53 | 76.0 | O |
| Example 14 | 1 | - | 35 | 40 | 7.22 | 0.51 | 79.2 | O |
| Comparative Example 1 | 4 | - | - | 40 | 13.4 | 1.20 | 57.9 | O |
| Comparative Example 2 | - | - | - | - | > 30 | - | > 500 | X |
| *The additive amount represents the proportion (parts by mass) of the additive used with respect to 100 parts by mass of the silicon powder. | | | | | | | | |

(Method for Measuring Viscosity of Silicon Particle-Containing Slurry)

The viscosity of the silicon particle-containing slurry was measured at 23°C and 100 rpm using a cone-plate viscometer (manufactured by Brookfield).

(Method for Measuring Average Particle Size of Silicon Particles)

The slurry was diluted with MEK, which was subjected to dispersion processing with ultrasonic waves for 1 minute, and the silicon particle-containing slurry was measured using MEK as a dispersion solvent with a laser particle size analyzer (Laser Micron Sizer LMS-3000 manufactured by Seishin Enterprise Co., Ltd.).

(Methods of Measurement and Analysis of $^{29}$Si-NMR)

A sample was collected in a φ4 mm solid-state NMR sample tube and was subjected to single pulse measurement with a solid-state NMR analyzer (JNM-ECA600 manufactured by JEOL RESONANCE). The obtained solid-state NMR spectral data was Fourier transformed by Delta 5, and the resulting data was subjected to waveform separation with

ACD Labs software using Gauss + Lorentz function. Based on the peak areas obtained by the waveform separation, the ratio of the peak area (ii) in a range of -100 to -110 ppm to the peak area (i) in a range of -75 to -85 ppm [the (ii)/(i) ratio] was calculated.

(Example 15)

The silicon-containing slurry obtained in Example 1, a polysiloxane compound, and a resol type phenolic resin were uniformly mixed together in a certain composition ratio (preparation composition calculated based on a composition after firing: SiOC/C/Si = 10/35/55), and then the mixture was charged into a three-neck separable flask. With one port capped, a nitrogen inlet pipe and a solvent trap device were connected to the two ports. Nitrogen was introduced into the flask, and the flask was heated in an oil bath up to 120°C while the liquid mixture was stirred with a magnetic stirrer, and the solvent was distilled off until the stirrer stopped moving. Subsequently, the flask was cooled to room temperature to obtain a resin dried object as a precursor to be fired.

The obtained precursor was high-temperature fired at 1,050°C for 6 hours in a nitrogen atmosphere to obtain a black solid. The obtained black solid was wet-milled with a planetary ball mill using ethanol as a solvent, and the solvent was removed and dried after milling to obtain black powder active material particles.

As described in "Production of Half Battery and Measurement of Charge-Discharge Characteristics" below, a half battery using the obtained black powder active material particles was produced, and charge-discharge characteristics were measured, with a discharge capacity of 1,461 mAh/g, a coulombic efficiency of 80.2%, and a 10-cycle capacity retention of 90.2%. Table 2 lists the battery characteristics.

(Example 16)

Black powder active material particles were produced in the same manner as in Example 13 except that the silicon-containing slurry obtained in Example 2 was used in place of the silicon-containing slurry obtained in Example 1 to obtain a half battery. Charge-discharge characteristics were measured, with a discharge capacity of 1,451 mAh/g, a coulombic efficiency of 79.0%, and a 10-cycle capacity retention of 89.8%. Table 2 lists the battery characteristics.

(Example 17)

Black powder active material particles were produced in the same manner as in Example 13 except that the silicon-containing slurry obtained in Example 3 was used in place of the silicon-containing slurry obtained in Example 1 to obtain a half battery. Charge-discharge characteristics were measured, with a discharge capacity of 1,075 mAh/g, a coulombic efficiency of 75.0%, and a 10-cycle capacity retention of 92.7%. Table 2 lists the battery characteristics.

(Example 18)

Black powder active material particles were produced in the same manner as in Example 13 except that the silicon-containing slurry obtained in Example 4 was used in place of the silicon-containing slurry obtained in Example 1 to obtain a half battery. Charge-discharge characteristics were measured, with a discharge capacity of 1,561 mAh/g, a coulombic efficiency of 81.2%, and a 10-cycle capacity retention of 86.4%. Table 2 lists the battery characteristics.

(Example 19)

Black powder active material particles were produced in the same manner as in Example 13 except that the silicon-containing slurry obtained in Example 5 was used in place of the silicon-containing slurry obtained in Example 1 to obtain a half battery. Charge-discharge characteristics were measured, with a discharge capacity of 1,204 mAh/g, a coulombic efficiency of 80.2%, and a 10-cycle capacity retention of 91.4%. Table 2 lists the battery characteristics.

(Example 20)

Black powder active material particles were produced in the same manner as in Example 13 except that the silicon-containing slurry obtained in Example 6 was used in place of the silicon-containing slurry obtained in Example 1 to obtain a half battery. Charge-discharge characteristics were measured, with a discharge capacity of 1,415 mAh/g, a coulombic efficiency of 80.3%, and a 10-cycle capacity retention of 89.9%. Table 2 lists the battery characteristics.

(Example 21)

Black powder active material particles were produced in the same manner as in Example 13 except that the silicon-containing slurry obtained in Example 7 was used in place of the silicon-containing slurry obtained in Example 1 to obtain a half battery. Charge-discharge characteristics were measured, with a discharge capacity of 1,453 mAh/g, a coulombic efficiency of 80.1%, and a 10-cycle capacity retention of 90.1%. Table 2 lists the battery characteristics.

(Example 22)

Black powder active material particles were produced in the same manner as in Example 13 except that the silicon-containing slurry obtained in Example 8 was used in place of the silicon-containing slurry obtained in Example 1 to obtain a half battery. Charge-discharge characteristics were measured, with a discharge capacity of 1,464 mAh/g, a coulombic efficiency of 80.0%, and a 10-cycle capacity retention of 89.7%. Table 2 lists the battery characteristics.

(Example 23)

Black powder active material particles were produced in the same manner as in Example 13 except that the silicon-containing slurry obtained in Example 9 was used in place of the silicon-containing slurry obtained in Example 1 to obtain a half battery. Charge-discharge characteristics were measured, with a discharge capacity of 1,487 mAh/g, a coulombic efficiency of 80.7%, and a 10-cycle capacity retention of 88.2%. Table 2 lists the battery characteristics.

(Example 24)

Black powder active material particles were produced in the same manner as in Example 13 except that the silicon-containing slurry obtained in Example 10 was used in place of the silicon-containing slurry obtained in Example 1 to obtain a half battery. Charge-discharge characteristics were measured, with a discharge capacity of 1,474 mAh/g, a coulombic efficiency of 80.3%, and a 10-cycle capacity retention of 89.3%. Table 2 lists the battery characteristics.

(Example 25)

Black powder active material particles were produced in the same manner as in Example 13 except that the silicon-containing slurry obtained in Example 11 was used in place of the silicon-containing slurry obtained in Example 1 to obtain a half battery. Charge-discharge characteristics were measured, with a discharge capacity of 1,442 mAh/g, a coulombic efficiency of 79.2%, and a 10-cycle capacity retention of 88.9%. Table 2 lists the battery characteristics.

(Example 26)

Black powder active material particles were produced in the same manner as in Example 13 except that the silicon-containing slurry obtained in Example 12 was used in place of the silicon-containing slurry obtained in Example 1 to obtain a half battery. Charge-discharge characteristics were measured, with a discharge capacity of 1,449 mAh/g, a coulombic efficiency of 80.5%, and a 10-cycle capacity retention of 89.3%. Table 2 lists the battery characteristics.

(Example 27)

Black powder active material particles were produced in the same manner as in Example 13 except that the silicon-containing slurry obtained in Example 13 was used in place of the silicon-containing slurry obtained in Example 1 to obtain a half battery. Charge-discharge characteristics were measured, with a discharge capacity of 1,460 mAh/g, a coulombic efficiency of 81.0%, and a 10-cycle capacity retention of 88.7%. Table 2 lists the battery characteristics.

(Example 28)

Black powder active material particles were produced in the same manner as in Example 13 except that the silicon-containing slurry obtained in Example 13 was used in place of the silicon-containing slurry obtained in Example 1 to obtain a half battery. Charge-discharge characteristics were measured, with a discharge capacity of 1,452 mAh/g, a coulombic efficiency of 80.6%, and a 10-cycle capacity retention of 89.1%. Table 2 lists the battery characteristics.

(Comparative Example 3)

Black powder active material particles were produced in the same manner as in Example 5 except that the silicon-containing slurry obtained in Comparative Example 1 was used in place of the silicon-containing slurry obtained in Example 1 to obtain a half battery. Charge-discharge characteristics were measured, with a discharge capacity of 551 mAh/g, a coulombic efficiency of 62.0%, and a 10-cycle capacity retention of 97.8%. Table 2 lists the battery characteristics.

[Table 2]

| | Battery Characteristics | | | |
|---|---|---|---|---|
| | Charge capacity [mAh/g] | Discharge capacity [mAh/g] | Coulombic efficiency [%] | 10-Cycle capacity retention |
| Example 15 | 1,823 | 1,461 | 80.2 | 90.2 |
| Example 16 | 1,836 | 1,451 | 79.0 | 89.8 |
| Example 17 | 1,436 | 1,075 | 75.0 | 92.7 |
| Example 18 | 1,922 | 1,561 | 81.2 | 86.4 |
| Example 19 | 1,514 | 1,204 | 79.5 | 91.4 |
| Example 20 | 1,762 | 1,415 | 80.3 | 89.9 |
| Example 21 | 1,814 | 1,453 | 80.1 | 90.1 |
| Example 22 | 1,830 | 1,464 | 80.0 | 89.7 |
| Example 23 | 1,843 | 1,487 | 80.7 | 88.2 |
| Example 24 | 1,827 | 1,474 | 80.3 | 89.3 |
| Example 25 | 1,821 | 1,442 | 79.2 | 88.9 |
| Example 26 | 1,800 | 1,449 | 80.5 | 89.3 |
| Example 27 | 1,825 | 1,460 | 81.0 | 88.7 |
| Example 28 | 1,801 | 1,452 | 80.6 | 89.1 |
| Comparative Example 3 | 889 | 551 | 62.0 | 97.8 |

(Production of Half Battery and Measurement of Charge-Discharge Characteristics)

A half battery for evaluation using the negative electrode active material according to the present invention was assembled as follows, and charge-discharge characteristics were measured.

A slurry was prepared by mixing the negative electrode active material (8 parts), acetylene black as a conductivity aid (1 part), an organic binding agent (1 part, breakdown: commercially available SBR (0.75 part) + CMC (0.25 part)) and distilled water (10 parts) and stirring the mixture for 10 minutes with a rotation and revolution type Awatori Rentaro. After applying a film to a copper foil with a thickness of 20 μm using an applicator, the film was dried at 110°C under reduced pressure to obtain an electrode thin film with a thickness of about 40 μm. It was punched through into a circular electrode with a diameter of 14 mm, which was pressed under a pressure of 20 MPa. In a glove box with a low oxygen concentration (< 10 ppm) and an extremely low moisture content (dew point: -40° or lower), the electrode according to the present invention was placed opposite to a Li foil as a counter electrode through a 25 μm polypropylene separator, and an electrolyte (Kishida Chemical, 1 mol/L of $LiPF_6$, diethyl carbonate: ethylene carbonate = 1:1 (volume ratio)) was adsorbed thereto to produce a half battery for evaluation (CR2032 type).

Battery characteristics were measured using a secondary battery charge-discharge tester (Hokuto Denko). Evaluation tests of charge-discharge characteristics were conducted at room temperature of 25°C, with a cutoff voltage range of 0.005 to 1.5 V and a charge-discharge rate of 0.1 C (the first to third times) and 0.2 C (the fourth cycle and later), and under a setting condition of constant-current and constant-voltage charging/constant-current discharging. At the time of switching between each charging and discharging, the half battery was left at rest in an open circuit for 30 minutes. Initial coulombic efficiency and cycle characteristics (indicating a capacity retention at 10 cycles in the present application) were determined as follows.

$$\text{Initial coulombic efficiency (\%) = initial discharge capacity (mAh/g)/initial charge capacity (mAh/g)}$$

$$\text{Capacity retention (10th) = 10th discharge capacity (mAh/g)/initial discharge capacity (mAh/g)}$$

## Claims

1. A low oxygen-type silicon nanoparticle-containing slurry comprising: low oxygen-type silicon nanoparticles; a nonaqueous solvent; and an additive,
the low oxygen-type silicon nanoparticles having a ratio of a peak area (ii) in a range of -100 to -110 ppm to a peak area (i) in a range of -75 to -85 ppm [a (ii)/(i) ratio] of 1.0 or less in $^{29}$Si-NMR.

2. The low oxygen-type silicon nanoparticle-containing slurry according to claim 1, wherein the low oxygen-type silicon nanoparticles have a volume average particle size (d50) of 10 to 200 nm.

3. The low oxygen-type silicon-containing slurry according to claim 1 or 2, comprising a cationic surfactant and/or an anionic surfactant as the additive.

4. The low oxygen-type silicon-containing slurry according to claim 3, wherein the additive has an amine value of the cationic surfactant of 1 to 100 mgKOH/g.

5. The low oxygen-type silicon-containing slurry according to claim 3, wherein the additive has an acid value of the anionic surfactant of 1 to 200 mgKOH/g.

6. The low oxygen-type silicon nanoparticle-containing slurry according to any one of claims 1 to 5, wherein the low oxygen-type silicon nanoparticles have a sheet shape.

7. The low oxygen-type silicon nanoparticle-containing slurry according to any one of claims 1 to 6, wherein the low oxygen-type silicon nanoparticle-containing slurry has a viscosity of 10 mPa·s or less.

8. The low oxygen-type silicon nanoparticle-containing slurry according to any one of claims 1 to 7, wherein the low oxygen-type silicon nanoparticle-containing slurry has a nonvolatile component at 110°C of 5 to 40% by weight.

9. The low oxygen-type silicon nanoparticle-containing slurry according to any one of claims 1 to 8, wherein the nonaqueous solvent is a ketone-based solvent.

10. The low oxygen-type silicon nanoparticle-containing slurry according to any one of claims 1 to 9, wherein the additive is contained in an amount of 5 to 60 parts by mass with respect to 100 parts by mass of the low oxygen-type silicon nanoparticles.

11. A negative electrode active material for a lithium-ion secondary battery comprising the low oxygen-type silicon nanoparticle-containing slurry according to any one of claims 1 to 10 as part of raw materials.

12. A secondary battery comprising the lithium-ion secondary battery active material according to claim 11 in a negative electrode.

13. A method for producing the low oxygen-type silicon nanoparticle-containing slurry according to any one of claims 1 to 10, the method comprising obtaining the low oxygen-type silicon nanoparticles by performing dispersion processing using a wet bead mill.

14. The method for producing the low oxygen-type silicon nanoparticle-containing slurry according to claim 13, wherein the dispersion processing is performed in an inert gas atmosphere.

[Fig. 1]

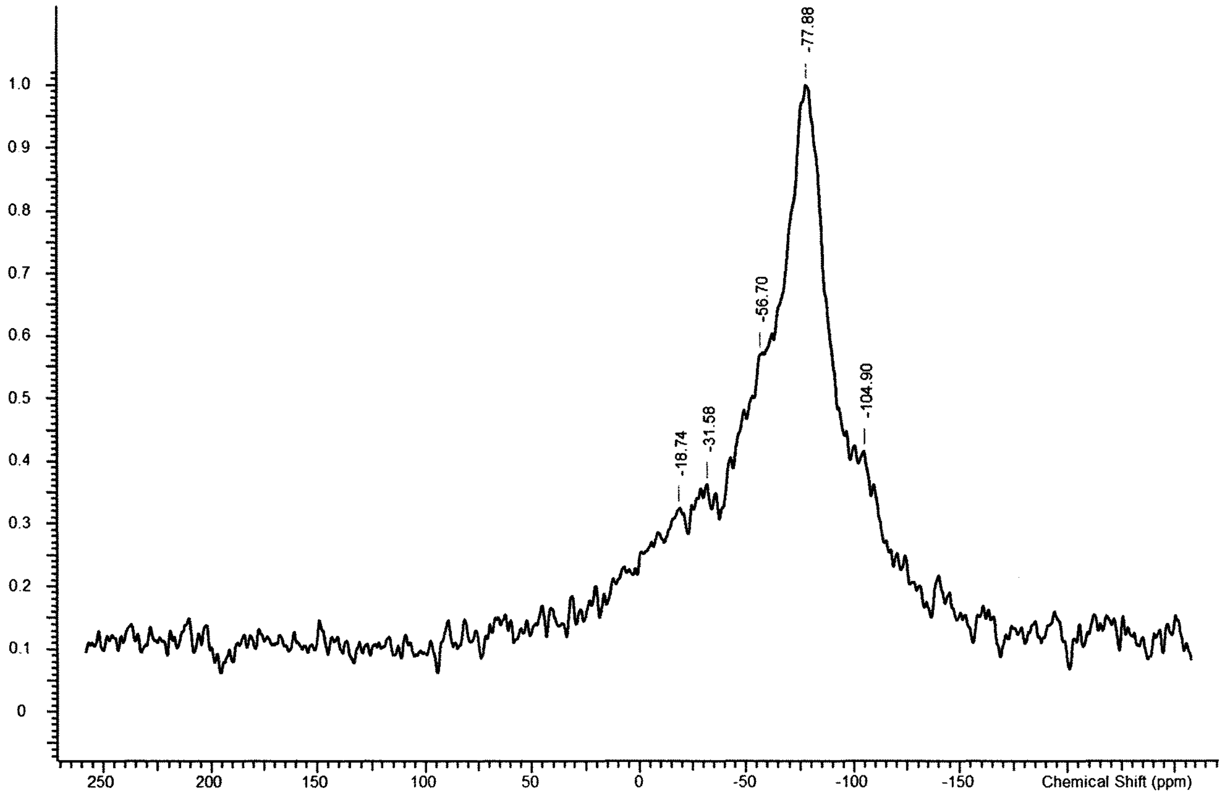
-77.88
-56.70
-104.90
-18.74
-31.58
1.0
0.9
0.8
0.7
0.6
0.5
0.4
0.3
0.2
0.1
0
250
200
150
100
50
0
-50
-100
-150
Chemical Shift (ppm)

[Fig. 2]

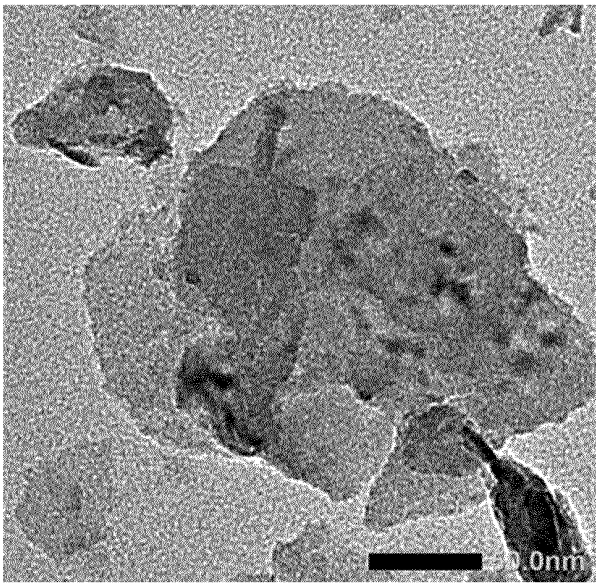

[Fig. 3]

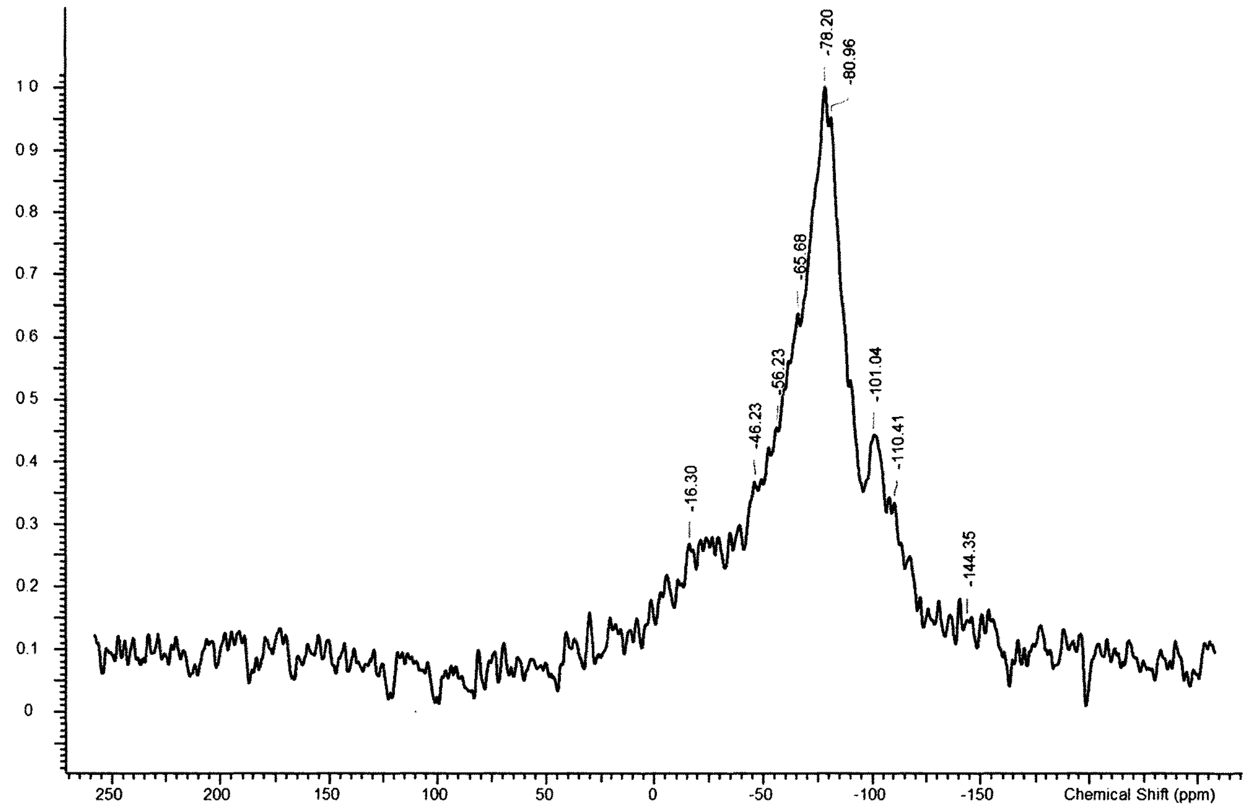
-78.20
-80.96
-65.68
-56.23
-46.23
-16.30
-101.04
-110.41
-144.35
1.0
0.9
0.8
0.7
0.6
0.5
0.4
0.3
0.2
0.1
0
250
200
150
100
50
0
-50
-100
-150
Chemical Shift (ppm)

[Fig. 4]

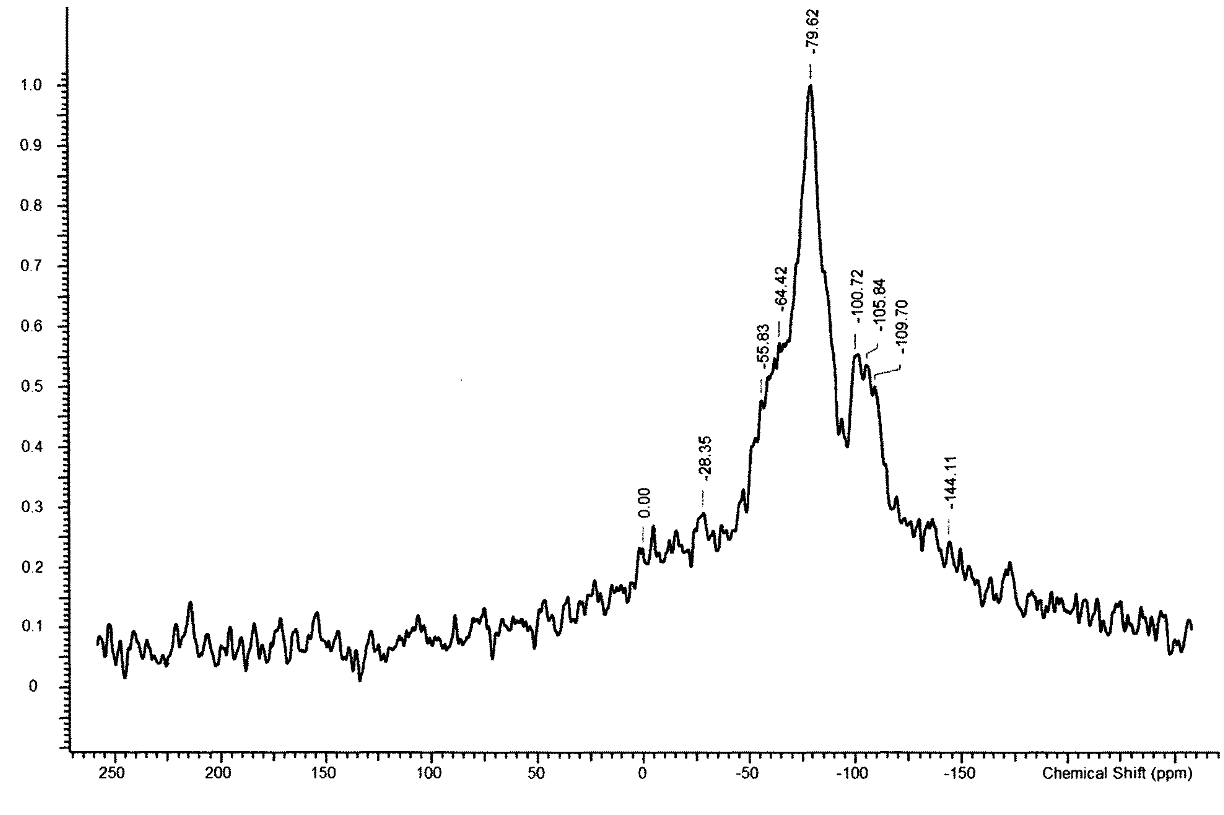
-79.62
-64.42
-55.83
-28.35
0.00
-100.72
-105.84
-109.70
-144.11
1.0
0.9
0.8
0.7
0.6
0.5
0.4
0.3
0.2
0.1
0
250
200
150
100
50
0
-50
-100
-150
Chemical Shift (ppm)

[Fig. 5]

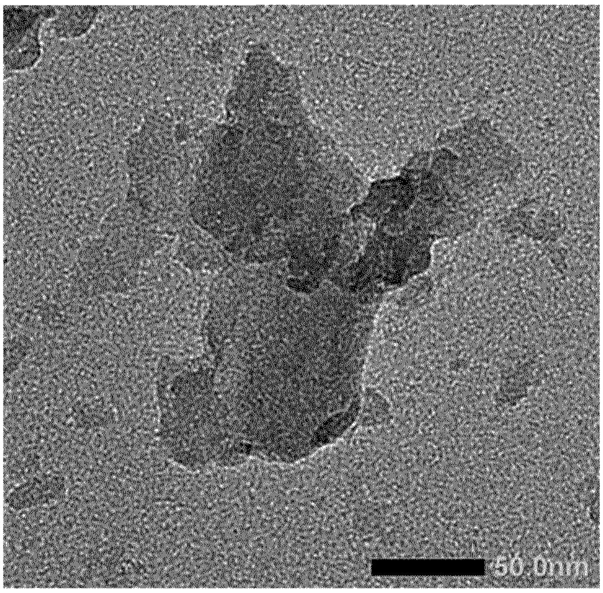
50.0nm

[Fig. 6]

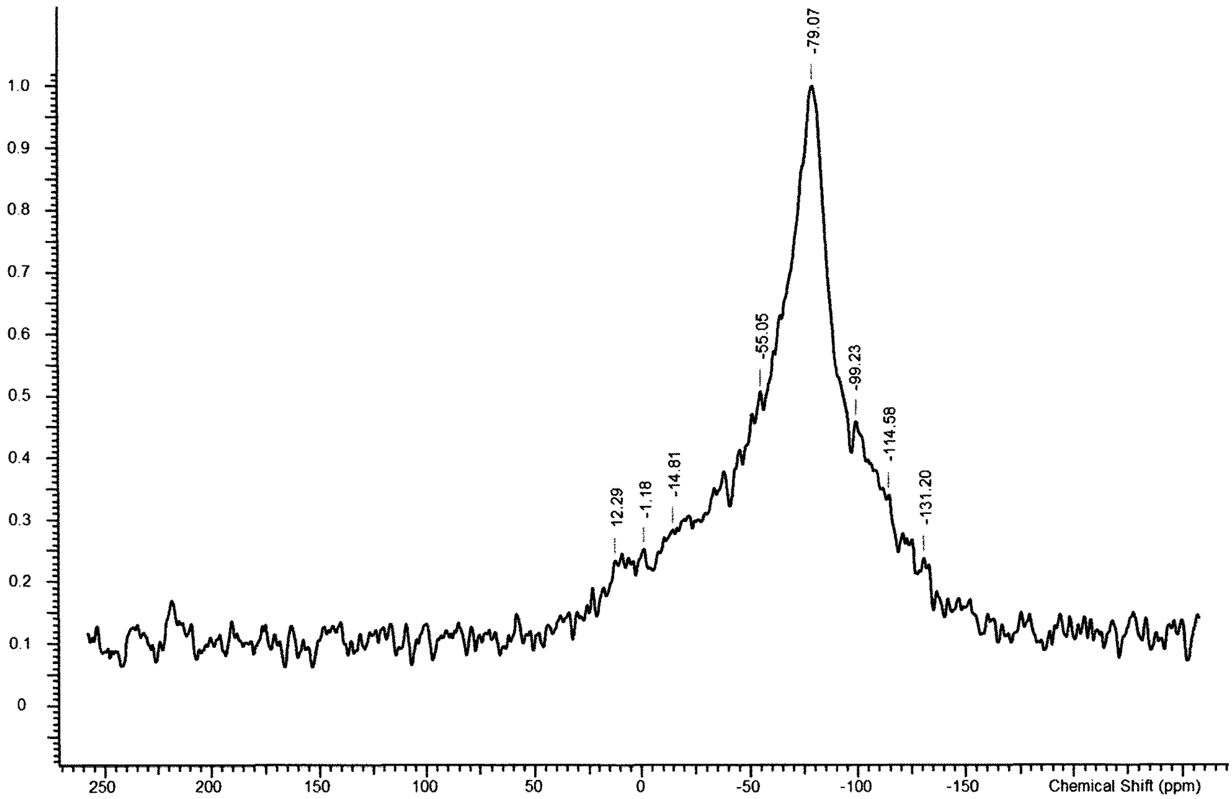
-79.07
-55.05
-99.23
-114.58
-131.20
12.29
-1.18
-14.81
1.0
0.9
0.8
0.7
0.6
0.5
0.4
0.3
0.2
0.1
0
250
200
150
100
50
0
-50
-100
-150
Chemical Shift (ppm)

[Fig. 7]

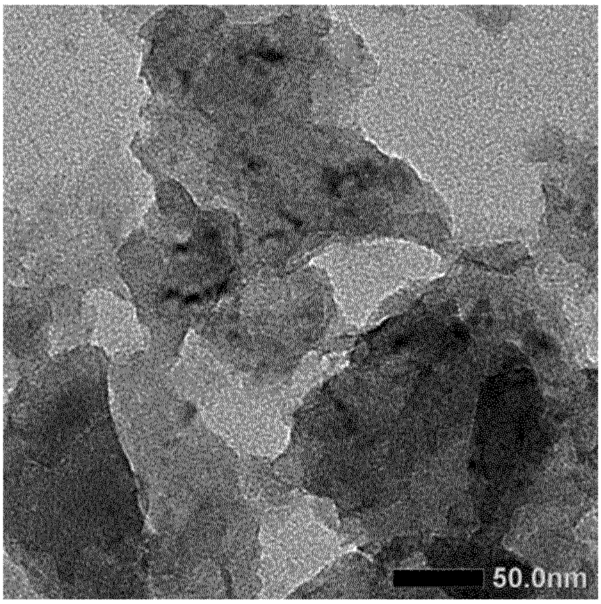

**INTERNATIONAL SEARCH REPORT**

International application No. PCT/JP2021/002970

A. CLASSIFICATION OF SUBJECT MATTER
H01M 4/1391(2010.01)i; H01M 4/48(2010.01)i; H01G 11/24(2013.01)i; H01G 11/30(2013.01)i; H01G 11/86(2013.01)i
FI: H01M4/1391; H01M4/48; H01G11/30; H01G11/24; H01G11/86v
According to International Patent Classification (IPC) or to both national classification and IPC

B. FIELDS SEARCHED

Minimum documentation searched (classification system followed by classification symbols)
H01M4/1391; H01M4/48; H01G11/24; H01G11/30; H01G11/86

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2008-277232 A (HITACHI CHEMICAL INDUSTRY CO., LTD.) 13 November 2008 (2008-11-13) paragraphs [0024]-[0074], fig. 1 | 1-2, 6-14<br>3-5 |
| X<br>A | WO 2015/025443 A1 (SHIN-ETSU CHEMICAL CO., LTD.) 26 February 2015 (2015-02-26) paragraphs [0044]-[0181], fig. 1-6 | 1, 10-12<br>2-9, 13-14 |
| A | WO 2013/175715 A1 (OSAKA TITANIUM TECHNOLOGIES CO., LTD.) 28 November 2013 (2013-11-28) | 1-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 April 2021 (08.04.2021) | 20 April 2021 (20.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/002970

| Patent Documents referred in the Report | Publication Date | Patent Family | Publication Date |
|---|---|---|---|
| JP 2008-277232 A | 13 Nov. 2008 | (Family: none) | |
| WO 2015/025443 A1 | 26 Feb. 2015 | US 2016/0233484 A1 paragraphs [0098]-[0406], fig. 1-6<br>JP 2015-156355 A<br>CN 105474438 A<br>KR 10-2016-0044478 A | |
| WO 2013/175715 A1 | 28 Nov. 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016139579 A
- JP 2005310759 A